# FASCICULE DE BREVET EUROPEEN

(11) **EP 1 099 464 B1**
(45) Date de publication et mention de la délivrance du brevet: **31.10.2007**
(21) Numéro de dépôt: 00403038.3
(22) Date de dépôt: 31.10.2000
(51) Int. Cl.: B01D 53/56, B01D 53/04, B01D 53/94, B01J 20/06, B01J 23/38

(54) **Procédé pour l'élimination des oxydes d'azote utilisant un matériau ilménite**
Verfaren zur Entfernung von Stickoxiden mittels eines Werkstoffes mit Ilmenit-Struktur
Process for eliminating nitrogen oxides using an Ilmenite material

(30) Priorité: 10.11.1999 FR 9914145
(43) Date de publication de la demande: 16.05.2001
(73) Titulaire: Institut Français du Pétrole, 92852 Rueil-Malmaison Cedex (FR)
(72) Inventeur: Becue, Thierry, 75006 Paris (FR); Malefant, Karine, 92500 Rueil-Malmaison (FR)

(56) Documents cités:
- US-A- 3 897 367
- US-A- 3 900 428
- US-A- 3 972 837
- US-A- 4 089 810
- US-A- 4 151 123
- US-A- 4 440 874
- US-A- 5 906 958

## Description

### Domaine technique

La présente invention concerne des matériaux qui favorisent l'élimination par adsorption des oxydes d'azote (NO et NO₂, couramment appelés NOₓ) présents dans un mélange gazeux pouvant être sur-stoechiométrique en composés oxydants et plus particulièrement en oxygène, lesdits matériaux n'étant pas empoisonnés par les produits soufrés rencontrés dans ces gaz. L'invention s'applique à l'élimination des oxydes d'azote (NOₓ) présents dans les gaz d'échappement de moteurs de véhicules automobiles et tout particulièrement de véhicules fonctionnant avec du diesel.

### Etat de la technique antérieure

La forte toxicité des oxydes d'azote, leur rôle dans la formation des pluies acides et de l'ozone troposphérique ont conduit à la mise en place de normes sévères limitant les rejets de ces composés. Pour satisfaire ces normes il est généralement nécessaire d'éliminer au moins une partie de ces oxydes présents dans les gaz d'échappement des moteurs automobiles ou stationnaires et des turbines.

L'élimination des oxydes d'azote par décomposition thermique ou de préférence catalytique est envisageable mais les hautes températures exigées par cette réaction sont incompatibles avec celles des gaz d'échappement. Seule la réduction catalytique des oxydes d'azote en azote est réalisable en utilisant les réducteurs présents, mais en faible quantité, dans le gaz d'échappement (CO, H₂, hydrocarbures imbrûlés ou dont la combustion a été imparfaite dans le moteur), et également en injectant, en amont du catalyseur, un complément de composés réducteurs. Ces agents de réduction sont des hydrocarbures, des alcools, des éthers ou autres composés oxygénés; ils peuvent être également le carburant liquide ou gazeux (sous pression "GNC" ou liquéfié "GPL") alimentant le moteur ou la turbine.

La demande de brevet EP 0 540 280 A1 décrit un dispositif pour réduire l'émission des oxydes d'azote dans les gaz d'échappement de moteurs à combustion interne, qui comprend un matériau pour l'adsorption et la désorption des oxydes d'azote. Selon ce procédé, les oxydes d'azote sont emmagasinés, au cours du fonctionnement en régime pauvre du moteur, c'est à dire pauvre en hydrocarbures, sous la forme de nitrates. Mais la capacité de stockage d'un piège fonctionnant selon ce principe est généralement détériorée par l'adsorption de produits soufrés, contenus dans les gaz d'échappement et qui forment des sulfates plus stables que les nitrates, empoisonnant le piège.

Par ailleurs, suite au piégeage des NOₓ, il est nécessaire de procéder à une étape de désorption des oxydes d'azote suivie de leur réduction. On connaît des dispositifs de traitement par oxydation catalysée du monoxyde de carbone CO et des hydrocarbures HC contenus dans les gaz d'échappement, faisant appel, par exemple à des catalyseurs de réduction des oxydes d'azote, appelés catalyseurs DeNOₓ, qui sont actifs pour réaliser la réduction des NOₓ dans des plages de température comprises entre 200 et 350°C comprenant par exemple des métaux précieux sur des supports en oxyde, tels que du platine ou du palladium déposé sur un support en alumine, en oxyde de titane ou de zirconium, ou par des pérovskites ou à des plages de température comprises entre 350 et 600°C comprenant par exemple des zéolithes hydrothermiquement stables (par exemple Cu-ZSM5). Un dispositif de traitement des gaz d'échappement d'un moteur à allumage par compression comportant un catalyseur et un absorbeur d'oxydes d'azote placés dans le collecteur d'échappement est décrit par exemple dans les brevets EP 0 540 280 A1 et EP 0 718 478 A1.

Il est connu de US 5.906.958 des compositions de formules BaMnO₃ et CaMnO₃ utilisée pour purifier les gaz d'échappement issus des moteurs automobiles. Ces compositions présentent une structure pérovskite dans laquelle les cations Ba²⁺ respectivement Ca²⁺ et Mn²⁺ sont de taille différente de sorte que le rapport des rayons cationiques Ba/Mn et Ca/Mn prend une valeur bien au delà de 1.

Le document la US-A-4440874 décrit le traitement de gaz comprenant des oxydes d'azote avec des matériaux comprenant comme structure ilménite le FeO-TiO2; les US-A-4089810 et US-A-3972837 divulguent l'usage d'un ilménite du type B2O3 avec un B qui est toujours Ru pour la même application.

Il est donc nécessaire que le matériau se comportant comme un piège pour les oxydes d'azote soit capable d'adsorber les oxydes d'azote aux basses températures, jusqu'à la température nécessaire pour le fonctionnement du catalyseur de réduction des NOₓ, le piège assurant alors la désorption des oxydes d'azote qui viennent au contact du catalyseur DeNOx à une température suffisante pour assurer l'amorçage de la réaction de réduction des NOₓ.

Les matériaux qui font l'objet de ce brevet peuvent se trouver à l'état naturel ou peuvent être facilement synthétisés en laboratoire [B. Durand et J.M. Paris, Compte-rendu de l'Académie des Sciences, Paris, t.281, Série C, p 539-542, (1975)][M.I. Baraton et al., Journal of Solid State Chemistry, 112, p 9-14 (1994)].

### Résumé de l'invention

L'invention concerne l'élimination des oxydes d'azote NO et NO₂, en particulier présents dans des gaz d'échappement, par exemple de moteurs à combustion interne de véhicules automobiles fonctionnant en milieu sur-stoechiométrique en oxydants, avec des matériaux pouvant adsorber les oxydes d'azote et pouvant désorber les NOₓ par élévation de la température et par variation de la composition chimique des gaz. Les matériaux sont des oxydes mixtes dont la charpente comprend au moins un cation métallique A et au moins un cation métallique B selon la revendication 1, entouré chacun de 6 atomes d'oxygène, la somme des charges de A et de B étant environ égale à 6, le rapport du rayon cationique de A sur le rayon cationique de B étant égal à 1±0,4 de préférence à 1±0,2. Les cations A et B s'arrangent de façon à former une structure ordonnée de type ilménite ABO₃.

### Intérêt de l'invention

Le matériau selon l'invention permet de piéger les oxydes d'azote aux basses températures et de les désorber à la température à laquelle un catalyseur deNOx est capable de les réduire. Ces matériaux sont insensibles aux oxydes de soufre et de carbone contenus dans les gaz d'échappement, ce qui évite l'empoisonnement desdits matériaux. Les matériaux réalisent l'adsorption des oxydes d'azote dans une large gamme de température, alors que la désorption s'effectue dans une fenêtre de température très étroite permettant une gestion aisée de la régénération thermique. Lors de la désorption, les oxydes d'azote préalablement adsorbés sont émis par bouffées de forte concentration en NOₓ, ce qui est bénéfique pour la cinétique de réaction de réduction des oxydes d'azote désorbés. La cinétique de réduction des NOₓ par des hydrocarbures est en effet d'ordre positif par rapport aux espèces oxydes d'azote. Ce matériau est aussi capable de désorber les oxydes d'azote par variation de la composition chimique des gaz avec ou sans variation de la température. Le dit matériau ne présente pas de phase oxyde basique qui stabilise fortement les oxydes d'azote et les oxydes de soufre respectivement sous formes de nitrates et de sulfates. Les SOₓ qui peuvent être adsorbés avec les NOₓ sur le matériau faisant l'objet de invention sont désorbés dans une gamme de température similaire à celle des NOₓ. L'empêchement de la formation de sulfates stables assure un empoisonnement moindre du matériau adsorbant, une fréquence et une température de régénération moins élevées, donc une durée de vie accrue du piège à NOₓ et un gain énergétique. Selon une mise en oeuvre particulière de l'invention, l'association du matériau revendiqué par la demanderesse avec un métal du groupe VIII permet l'élimination des NOₓ adsorbés par réduction lors du passage en milieu riche.

### Exposé de l'invention

La présente invention concerne un procédé pour l'élimination des oxydes d'azote, avec des matériaux oxydes dont les cations métalliques A et B sont en position octaédrique et forment une structure ABO₃ de type ilménite. A et B sont choisis parmi les éléments de la classification périodique de telle sorte que la somme de leur degré d'oxydation soit égale à environ +6 et que la taille des cations A et B soit proche.
Le matériau présente une faculté à adsorber les NOₓ aux basses températures et à les désorber à plus haute température. Il est aussi capable de désorber les NOₓ par augmentation du rapport composés réducteurs/oxygène des gaz.

Plus précisément, l'invention concerne un procédé pour l'élimination des oxydes d'azote dans des gaz d'échappement, en particulier de moteur à combustion interne de véhicules automobiles en présence de matériaux de structure ABO₃ de type ilménite tels que définis dans la suite.

La phase adsorbante des matériaux utilisés dans le procédé selon l'invention a une structure tridimensionnelle de type ilménite et une stoechiométrie ABO₃ avec :
A choisi dans le groupe constitué par le nickel, le cobalt, le fer, le zinc, le manganèse, le cuivre, le magnésium, l'argent, le lithium, le sodium, le potassium, le calcium, le strontium, le cadmium, le plomb et l'étain et B choisi dans le groupe constitué par le manganèse, le vanadium, le niobium, le silicium, le zirconium, l'étain, le chrome, l'antimoine, le bismuth et le germanium,
- les ions O²⁻ occupant une position octaédrique autour des cations A et des cations B,
- la somme des charges des cations A et B étant égale à environ 6,
- le rayon cationique de A et B étant de dimension, telle que le rapport du rayon cationique de A sur le rayon cationique de B est égal à 1±0,4, de préférence à 1±0,2.

Les éléments (A) sont choisis dans le groupe constitué par le nickel, le cobalt, le fer, le zinc, le manganèse, le cuivre, le magnésium, l'argent, le lithium, le sodium, le potassium, le calcium, le strontium, le cadmium, le plomb ou l'étain, et de façon plus préférée parmi le nickel, le magnésium, le zinc, le cobalt, le cadmium, le fer et le cuivre, ou un mélange de ces éléments. Les éléments (B) sont de choisis parmi le manganèse, le vanadium, le niobium, le silicium, le zirconium, l'étain, le chrome, l'antimoine, le bismuth ou le germanium, et de façon plus préférée parmi le manganèse, le titane, le vanadium, le niobium, le silicium, l'étain ou le germanium ou un mélange de ces éléments.

Dans une mise en oeuvre particulière de l'invention, le matériau ABO₃ comprend en outre au moins un élément (C) choisi parmi les métaux nobles du groupe VIII de la classification périodique des éléments, tels que le platine, le palladium, le rhodium, le ruthénium, l'iridium. La quantité massique de métal (C) est généralement comprise entre 0,05 et 5 % par rapport à la masse totale de matériau.
Le matériau selon l'invention présente généralement une surface spécifique comprise entre 20 et 300 m²/g.

Il existe différents procédés de préparation de ces matériaux. Il peut s'agir de synthèses par mélange et broyage de précurseurs solides inorganiques (oxydes, carbonates ...), suivis d'une calcination. Suivant les composés, la calcination peut avoir lieu à des pressions supérieures à la pression atmosphérique. Les matériaux peuvent aussi être obtenus par chauffage à reflux de solutions de sels de précurseurs (acétates, carbonates, nitrates, sulfates, chlorures ...), séchage et calcination, par précipitation de sels de précurseurs, précipité qui est ensuite filtré puis calciné, ou par synthèse hydrothermale qui consiste à chauffer sous pression autogène une solution aqueuse contenant les éléments constituant le matériau final. Des matériaux de structure ilménite peuvent aussi être obtenus par réaction de décomposition entre un oxyde mixte et un liquide correspondant à un sel fondu contenant l'élément à incorporer dans l'oxyde mixte. Les matériaux obtenus à partir de ces synthèses peuvent ensuite être modifiés par échange ionique à partir d'un sel fondu du cation à échanger. L'élément (C) éventuel est introduit par toutes les méthodes connues de l'homme du métier : imprégnation à sec, en excès, échange ionique, ...

Les phases adsorbantes peuvent se présenter sous forme de poudre, de billes, de pastilles, d'extrudés, elles peuvent être également déposées ou directement préparées sur des supports monolithiques en céramique ou en métal. Avantageusement, en vue d'augmenter la dispersion des matériaux et donc d'augmenter leur capacité à adsorber les NOₓ, les matériaux peuvent être déposés sur des supports poreux de grande surface spécifique tels que SiO₂, Al₂O₃, TiO₂, ZrO₂, SiC ou MgO avant d'être mis en forme (extrusion, enduction...). Ces supports sont généralement choisis dans le groupe constitué par les composés ci-après : l'alumine (alpha, béta, delta, êta, gamma, khi ou l'alumine thêta), les silices, les silice-alumines, les zéolites, l'oxyde de titane, l'oxyde de zirconium, les carbures divisés, par exemple les carbures de silicium, simple ou mixtes. Des oxydes mixtes ou des solutions solides comprenant au moins deux des oxydes précités peuvent être ajoutés.

Cependant, pour l'utilisation sur véhicule, il est souvent préférable de mettre en oeuvre des supports rigides (monolithes) présentant une porosité ouverte importante (supérieure à 70%) afin de limiter les pertes de charge que pourraient engendrer les forts débits de gaz, et surtout les grandes vitesses spatiales des gaz d'échappement. En effet, ces pertes de charge pénalisent le bon fonctionnement du moteur et contribuent à abaisser le rendement d'un moteur à combustion interne (essence ou Diesel). Par ailleurs, la ligne d'échappement étant soumise à des vibrations ainsi qu'à des chocs mécaniques et thermiques importants, les catalyseurs en billes, en pastilles ou en extrudés risquent de subir des détériorations soit par attrition soit par fracturation.
Deux techniques sont mises en oeuvre pour préparer les catalyseurs de l'invention sur des supports (ou substrats) monolithique en céramique ou en métal.

La première comprend le dépôt direct sur le support monolithique, par la technique d'enduction connue de l'homme de l'art, de la phase adsorbante dans son état final. La phase adsorbante peut aussi être enduite juste après l'étape de précipitation, de synthèse hydrothermale ou de chauffage à reflux, l'étape ultime de calcination étant effectuée sur la phase déposée à même le monolithe.

La seconde technique comprend tout d'abord, le dépôt de l'oxyde inorganique sur le support monolithique puis la calcination du monolithe entre 500 et 1100°C de telle manière que la surface spécifique de cet oxyde soit comprise entre 20 et 150 m²g⁻¹, puis l'enduction du substrat monolithique recouvert par l'oxyde inorganique avec la phase.
Les supports monolithes qui peuvent être mis en oeuvre sont:
- soit en céramique, dont les éléments principaux peuvent être l'alumine, la zircone, la cordiérite, la mullite, la silice, les alumino-silicates ou la combinaison de plusieurs de ces composés,
- soit en carbure et/ou nitrure de silicium,
- soit en titanate d'aluminium,
- soit en métal généralement obtenu à partir d'alliage de fer, chrome et aluminium dopés éventuellement par du nickel, du cobalt, du cérium ou de l'yttrium.

Les supports céramiques ont une structure de type nid d'abeille ou se présentent sous forme de mousse ou de fibres.

Les supports métalliques peuvent être réalisés par l'enroulement de feuillards ondulés ou par l'empilement de feuilles métalliques également ondulées, constituant une structure en nid d'abeille à canaux droits ou à canaux en zigzag communiquant entre eux ou non. Ils peuvent être également réalisés à partir de fibres ou de fils métalliques enchevêtrés, tissés, tressés ou tricotés.

Pour les supports en métal renfermant de l'aluminium dans leur composition, il est recommandé de les prétraiter à haute température (par exemple entre 700 et 1100°C) pour développer en surface une micro-couche d'alumine réfractaire. Cette micro-couche superficielle, de porosité et de surface spécifique supérieure à celle du métal d'origine favorise l'accrochage de la phase active tout en protégeant le reste du support contre la corrosion.

La quantité de phase adsorbante déposée ou préparée directement sur le support (ou substrat) céramique ou métallique est généralement comprise entre 20 et 300g par litre dudit support et avantageusement entre 50 et 200g par litre.

Les matériaux selon l'invention permettent donc d'adsorber et de désorber les oxydes d'azote présents dans les gaz, en particulier les gaz d'échappement.

Ces matériaux sont caractérisés en ce qu'ils sont capables d'adsorber les NOₓ à une température généralement comprise entre 50 et 400°C et de préférence entre 100 et 350°C, et de manière plus préférée entre 150 et 300°C. Les dits oxydes d'azote peuvent être désorbés par chauffage à une température généralement comprise entre 300 et 500°C et de manière préférée comprise entre 350 et 450°C. Ils peuvent aussi être désorbés par variation de la composition des gaz, en augmentant par exemple de façon ponctuelle la concentration en composés réducteurs tels que hydrocarbures, hydrogène, monoxyde de carbone, à des températures comprises ente 150 et 500°C, de préférence entre 200 et 450°C et de manière plus préférée entre 250 et 400°C. Thermiquement ou chimiquement, la désorption des oxydes d'azote peut être déclenchée dans des gammes de températures où les catalyseurs classiques de réduction des NOx sont efficaces. De plus, la désorption thermique selon l'invention peut avoir lieu sur d'étroites fenêtres de températures avec généralement une amplitude de 80°C. Or, pour les voitures Diesel, la température des gaz d'échappement est généralement comprise entre 150 et 300°C et dépasse rarement les 500°C. Les matériaux utilisés dans le procédé selon l'invention sont donc adaptés à l'adsorption des oxydes d'azote présents dans les gaz d'échappement, de moteurs stationnaires ou particulièrement de moteurs automobiles Diesel ou à allumage commandé (moteurs dits à réglage pauvre), mais également dans les gaz issus de turbine à gaz fonctionnant avec des carburants gazeux ou liquides. Ces gaz se caractérisent aussi par des teneurs en oxydes d'azote de quelques dizaines à quelques milliers de parties par million (ppm), et peuvent contenir des teneurs comparables en composés réducteurs (CO, H₂, hydrocarbures) et en soufre, ainsi que des concentrations importantes en oxygène (de 1 à près de 20% volume) et en vapeur d'eau. Le matériau selon l'invention peut être utilisé à des VVH (vitesses volumiques horaires correspondant à des rapports de volume de monolithe par débit de gaz) du gaz d'échappement généralement comprises entre 500 et 150 000 h-1, par exemple entre 5000 et 100 000 h-1.

L'invention concerne également l'utilisation des matériaux selon dans un procédé d'élimination des oxydes d'azote, tout particulièrement dans un milieu sur-stoechiométrique en oxydants. Ainsi le matériau selon l'invention peut être utilisé dans un procédé comprenant :
- une étape d'adsorption d'au moins une partie desdits oxydes d'azote sur un matériau d'adsorption tel que défini dans la présente invention,
- une étape de désorption des oxydes d'azote, se faisant par augmentation de la température ou par variation de la composition des gaz d'échappement,
- une étape de réduction sélective d'au moins une partie des oxydes d'azote en azote moléculaire par des agents réducteurs en présence d'au moins un catalyseur de réduction des oxydes d'azote.

Ainsi le procédé d'élimination des oxydes d'azote comprend lors de l'étape de réduction des oxydes d'azote l'utilisation d'un catalyseur actif et sélectif pour la réduction des oxydes d'azote en azote moléculaire dans un milieu sur-stoechiométrique en oxydants, par des agents réducteurs. Les catalyseurs de réduction des oxydes d'azote en azote ou protoxyde d'azote comprennent généralement au moins un oxyde inorganique réfractaire et peuvent comprendre au moins une des zéolithes, choisie par exemple parmi les zéolithes MFI, NU-86, NU-87, EU-1 et généralement au moins un élément choisi parmi les éléments des groupes VIB, VIIB, VIII et IB des métaux de transition. Ces catalyseurs peuvent contenir éventuellement au moins un élément choisi parmi les métaux nobles du groupe VIII, par exemple le platine, le rhodium, le ruthénium, l'iridium, le palladium et éventuellement au moins un élément choisi parmi les éléments des groupes IIA des alcalino-terreux et IIIB des terres rares. Par exemple les catalyseurs de réduction des oxydes d'azote comprennent les combinaisons suivantes : Cu-MFI, Cu-ZSM5, Fe-MFI, Fe-ZSM5, Ce-MFI, Ce-ZSM5, Pt-MFI, Pt-ZSM5.

L'oxyde inorganique réfractaire est choisi parmi les supports de type Al₂O₃, SiO₂, ZrO₂ et TiO₂, de préférence l'alumine.
Les agents réducteurs sont choisis parmi CO, H₂, les hydrocarbures, présents dans le carburant ou ajoutés sous forme de produits frais.

Dans le cas où le matériau d'adsorption des oxydes d'azote selon la présente invention contient au moins un élément (C) choisi parmi les métaux nobles du groupe VIII de la classification périodique des éléments, le procédé d'élimination des oxydes d'azote comprend :
- une étape d'adsorption d'au moins une partie desdits oxydes d'azote sur le matériau tel que défini dans la présente invention,
- une étape de désorption des oxydes d'azote,
- une étape de réduction sélective d'au moins une partie des oxydes d'azote en azote moléculaire en présence de composés réducteurs sur le matériau tel que défini dans la présente invention.

Ainsi, la réduction des oxydes d'azotes en azote ou protoxyde d'azote peut avoir lieu directement sur le matériau d'adsorption selon l'invention qui permet à la fois de piéger les oxydes d'azote, de désorber lesdits oxydes d'azote et de les réduire.

### Exemples

Les exemples, 1 et 3 à 6 ci-après, illustrent l'invention sans en limiter la portée.
L'exemple 2 décrit un matériau utilisé en piégeage des NOx selon l'art antérieur.
A titre de comparaison, tous ces catalyseurs sont testés au laboratoire en micro unité avec un mélange de gaz synthétique.

Dans tous les exemples, la désignation de phase adsorbante déposée sur le support (ou substrat) correspond, après perte au feu, à la somme des éléments constituant le matériau décrit dans la procédure ci-dessus, à savoir : le ou les éléments (A) et (B) contenu au centre des octaèdres d'oxygène, éventuellement au moins un métal précieux (C).

Les teneurs massiques des différents éléments constituants la phase adsorbante sont mentionnées en pourcentage dans le tableau I. L'oxygène des phases oxydes n'est pas pris en compte dans le bilan de masse.

### Exemple 1 (invention)

On ajoute une solution aqueuse d'hydrogénocarbonate de sodium (1M) à une solution contenant 18,2 g d'acétate de nitrate de nickel et 15,7 g de nitrate de manganèse dissous dans 500 ml d'eau distillée. On mélange pendant 12 heures, puis on filtre le précipité obtenu, on le lave puis on le sèche à l'étuve à 100°C. Avant utilisation, il sera calciné sous air à 600°C. La technique de diffraction des rayons X indique que la structure cristallographique du matériau obtenu est celle de l'ilménite.

### Exemple 2 (comparatif)

On utilise un matériau de formule PtBaLa-CeO₂Al₂O₃-TiO₂ pour piéger les NOₓ par formation de nitrates.

### Exemple 3 (invention)

On reproduit le catalyseur de l'exemple 1 puis on l'imprègne avec du platine dans une proportion correspondant à 1 pour cent massique. Le dépôt de platine se fait par imprégnation à sec à partir d'une solution de Pt(NH₃)₄(NO₃)₂.

**Tableau I : Composition massique des matériaux préparés selon les exemples 1 à 3**

| Exemples | Matériaux | Ba | La | Ce | Ni | Mn | Ti | Al | Pt |
|---|---|---|---|---|---|---|---|---|---|
| Exemple 1 (inv.) | NiMnO₃ | | | | 36 | 34 | | | |
| Exemple 2 (comp.) | PtBaLa-CeO₂-Al₂O₃-TiO₂ | 18 | 3 | 11 | | | 8.5 | 18.1 | 0.5 |
| Exemple 3 (inv.) | Pt/NiMnO₃ | | | | 36 | 34 | | | 1.0 |

### Exemple 4 : Résultats des tests d'adsorption et de désorption thermique des oxydes d'azote

Les matériaux testés sont installés dans un micro-réacteur placé au centre d'un four. Ils subissent un prétraitement à 600°C pendant 5 heures sous un mélange gazeux constitué d'azote contenant 18,5 % O₂ et 4 % H₂O. Sous le même mélange, ces matériaux sont amenés à 200°C où ils sont alors traversés pendant 25 minutes par un mélange gazeux contenant des oxydes d'azote :

| | | |
|---|---|---|
| Vitesse spatiale horaire (VVH) : | | 50 000h⁻¹ |
| Composition du mélange: | | |
| | NOₓ : | 450ppm : NO 365ppm, NO2 85ppm |
| | O₂ : | 18.5% |
| | H₂O : | 4% |
| | N₂ : | complément à 100% |

Après les vingt-cinq minutes d'adsorption, l'alimentation en oxydes d'azote est coupée, et les matériaux subissent un chauffage pour désorber les NOₓ :

| | | |
|---|---|---|
| Vitesse spatiale horaire (VVH) : | | 50 000h⁻¹ |
| Composition du mélange: | | |
| | O₂ | : 18.5% |
| | H₂O : | 4% |
| | N₂ | : complément à 100% |
| Fenêtre de température de désorption : | | 200 à 600°C |
| Rampe de température : | | 10°C/min |

Dans le tableau II ci-dessous sont rassemblées les valeurs indiquant la quantité d'oxydes d'azote adsorbés ainsi que les températures de désorption de ces oxydes.

**Tableau II : Résultats des tests d'adsorption à 200°C et de désorption en micro - unité**

| Exemple | Matériaux | surface spécifique | Sans Pt | | avec Pt | |
|---|---|---|---|---|---|---|
| | | | | | | |
| | | (m²/g) | Capacité à 200°C (mgNO/g) | T_{dés} (°C) | Capacité à 200°C (mgNO/g) | T_{des} (°C) |
| 1 (inv) | NiMnO₃ | 75 | 6,4 | 400 | | |
| 2 (comp) | Pt-Ba-Ce-La/TiO₂-Al₂O₃ | 120 | | | 6,1 | 570 |
| 3 (inv.) | NiMnO₃ + Pt imprégné | 75 | | | 4,5 | 400 |

On constate que les matériaux revendiqués par la demanderesse particulièrement quand ils n'ont pas de phase au platine, sont plus efficaces dans l'adsorption des oxydes d'azote que les matériaux testés pour comparaison. Les matériaux selon la présente invention procurent l'avantage d'être très adsorbants, sans la nécessité de la présence du platine. Surtout, les matériaux revendiqués montrent une température de désorption des oxydes d'azote relativement basse, adéquate pour une application dans une ligne d'échappement d'un moteur Diesel.

Le tableau III ci-dessous rassemble les valeurs indiquant la quantité d'oxydes d'azote adsorbés par le matériau de l'exemple 1 dans les conditions précédentes mais à des températures d'adsorption différentes.

**Tableau III : Résultats des tests d'adsorption des NOx par le matériau de l'exemple 1**

| | Capacité d'adsorption (mgNO/g) aux températures de | | | | | |
|---|---|---|---|---|---|---|
| Matériau | 50°C | 150°C | 200°C | 300°C | 350°C | 390 |
| Exemple 1 | 4,3 | 6,0 | 6,4 | 8,0 | 7,0 | 2,0 |

La capacité d'adsorption n'est guère affectée par la température ce qui permet de travailler dans une large gamme de température.

L'analyse des gaz en sortie du micro-réacteur montre que les matériaux revendiqués adsorbent, jusqu'à leur saturation, la totalité des NOₓ (indifféremment NO ou NO₂) avec lesquels ils sont en contact entre 50°C et la température de désorption, c'est pourquoi, les matériaux selon la présente invention présentent de bonnes performances d'adsorption, même en absence de phase oxydante (par exemple Pt supporté).

### Exemple 5 : Résultats des tests d'adsorption et de désorption thermique des NOₓ en présence d'hydrocarbures et de CO₂

Les matériaux testés sont installés dans un réacteur placé au centre d'un four. Ils subissent un prétraitement à 600°C pendant 5 heures sous un mélange gazeux constitué d'azote contenant 18,5% O₂, 5% CO₂, 4% H₂O et 2000 ppmC de C₂H₄. Sous le même mélange, ces matériaux sont amenés à la température de 200°C ou 300°C, où ils sont alors traversés pendant 20 minutes par un mélange gazeux contenant des oxydes d'azote :

| | | |
|---|---|---|
| Vitesse spatiale horaire (VVH) : | | 50 000 h⁻¹ |
| Composition du mélange: | | |
| | NOₓ : | 450ppm : NO 365ppm, NO2 85ppm |
| | O₂ : | 18,5% |
| | H₂O : | 4% |
| | CO₂ : | 5% |
| | C₂H₄ : | 2000 ppmC |
| | N₂ : | complément à 100% |

Après les vingt minutes d'adsorption, l'alimentation en oxydes d'azote est coupée, et les matériaux subissent un chauffage pour désorber les NOₓ :

| | | |
|---|---|---|
| Vitesse spatiale horaire (VVH) : | | 50 000 h⁻¹ |
| Composition du mélange: | | |
| | O₂ : | 18,5% |
| | H₂O: | 4% |
| | CO₂ : | 5% |
| | C₂H₄ : | 2000 ppmC |
| | N₂ : | complément à 100% |
| Fenêtre de température de désorption : | | de 200 ou 300°C à 600°C |
| Rampe de température : | | 10°C/min |

Dans le tableau IV ci-dessous, sont rassemblées pour le matériau de l'exemple 1 les valeurs indiquant la quantité d'oxydes d'azote adsorbés ainsi que les températures de désorption de ces oxydes ; elles sont comparées aux résultats obtenus dans les conditions précédentes pour le même matériau.

**Tableau IV : Résultats des tests d'adsorption**

| Exemple | VVH (h⁻¹) | Composition du mélange lors du prétraitement | Composition du mélange lors de l'adsorption | Capacité d'adsorp. à 200°C (mgNO/g) | Capacité d'adsorp à 300°C (mgNO/g) | T_{dés} (°C) |
|---|---|---|---|---|---|---|
| 1 (inv.) | 50 000 | O₂, H₂O, N₂ | NO, O₂, H₂O, N₂ | 6,4 | | 400 |
| 1 (inv.) | 50 000 | O₂, CO₂, H₂O, C₂H₄, N₂ | NO, O₂, CO₂, H₂O, C₂H₄, N₂ | 2,9 | | 400 |
| 1 (inv.) | 50 000 | O₂, H₂O, N₂ | NO, O₂, H₂O, N₂ | | 8,0 | 400 |
| 1 (inv.) | 50 000 | O₂, CO₂, H₂O, C₂H₄, N₂ | NO, O₂, CO₂, H₂O, C₂H₄, N₂ | | 4,5 | 400 |

Si le mélange est rendu plus complexe par ajout d'autres molécules gazeuses (CO₂, C₂H₄) classiquement contenues dans des gaz d'échappement, on s'aperçoit que la capacité d'adsorption n'est abaissée que de 50% environ.
De tels résultats montrent que les matériaux revendiqués par la demanderesse peuvent être utilisés pour le piégeage des oxydes d'azote contenus dans des gaz d'échappement, présentant de fortes VVH et des molécules gazeuses autres que les NOₓ en forte concentration.
Les températures de désorption des oxydes d'azote piégés dans le matériau ne sont pas significativement modifiées par la présence d'autres molécules adsorbées sur le matériau.

### Exemple 6 : Résultats des tests d'adsorption et de désorption thermique des NOₓ en présence de molécules soufrées

Les matériaux testés sont installés dans un micro-réacteur placé au centre d'un four. Ils subissent un prétraitement à 600°C pendant 5 heures sous un mélange gazeux constitué d'azote contenant 18,5 % O₄ et 4 % H₂O. Sous le même mélange, ces matériaux sont amenés à la température de 200°C, où ils sont alors traversés pendant 20 minutes par un mélange gazeux contenant des oxydes d'azote et du dioxyde de soufre.

| | | |
|---|---|---|
| Vitesse spatiale horaire (VVH) : | | 50 000 h⁻¹ |
| Composition du mélange: | | |
| | NOₓ : | 450ppm : NO 365ppm, NO2 85ppm |
| | SO₂ : | 50 ppm |
| | O₂ : | 18.5% |
| | H₂O : | 4% |
| | N₂ : | complément à 100% |

Après les vingt minutes d'adsorption, l'alimentation en oxydes d'azote et de soufre est coupée, et les matériaux subissent un chauffage pour désorber les NOₓ :

| | | |
|---|---|---|
| Vitesse spatiale horaire (VVH) : | | 50 000 h⁻¹ |
| Composition du mélange: | | |
| | O₂ : | 18.5% |
| | H₂O : | 4% |
| | N₂ : | complément à 100% |
| Fenêtre de température de désorption : | | 200 à 600°C |
| Rampe de température | : | 10°C/min |

Ils subissent alors une seconde série d'adsorption et de désorption.

Dans le tableau V ci-dessous, sont rassemblées pour les matériaux de l'exemple 1 les valeurs indiquant la quantité d'oxydes d'azote adsorbés ainsi que les températures de désorption de ces oxydes, en présence ou non de dioxyde de soufre.

**Tableau V : Evaluation de la sensibilité au soufre**

| | | | 1^{ère} adsorption | | 2^{nde} adsorption (après désorption à 600°C) | |
|---|---|---|---|---|---|---|
| Exemples | VVH (h⁻¹) | | Capacité à 200°C (mgNO/g) | T_{dés} (°C) | Capacité à 200°C (mgNO/g) | T_{dés} (°C) |
| 1 (inv.) | 50 000 | sans SO₂ | 6.4 | 400 | 6.3 | 400 |
| 1 (inv.) | 50 000 | avec SO₂ | 5.4 | 395 | 5.3 | 395 |
| 4 (comp.) | 50 000 | sans SO₂ | 6.1 | 570 | 5.7 | 570 |
| 4 (comp.) | 50 000 | avec SO₂ | 4.1 | 560 | 3.0 | 560 |

La capacité d'adsorption des oxydes d'azote des matériaux de l'exemple 1 n'est abaissée que de 15 % en présence d'oxyde de soufre contre 33 % pour le matériau de l'exemple 4 selon l'art antérieur.

Les températures de désorption des oxydes d'azote qui ont été piégés sont sensiblement égales aux températures obtenues lors des expériences sans soufre.
Cependant, les matériaux de l'exemple 1 retrouvent la totalité de leur capacité d'adsorption initiale après une désorption thermique à 600°C (la capacité lors de l'adsorption 2 est sensiblement égale à la capacité de la première adsorption), ce qui n'est pas le cas pour le composé de l'exemple 4. Les pièges à NOₓ revendiqués par la demanderesse présentent donc le gros avantage de pouvoir se régénérer facilement après avoir été en contact avec des oxydes de soufre alors que les matériaux fonctionnant en piégeage des NOₓ par formation de nitrates (exemple 4) sont empoisonnés par des espèces sulfates qui sont extrêmement stables thermiquement.

### Exemple 7 : Résultats des tests d'adsorption et de désorption par variation de la richesse des gaz

Les matériaux testés sont installés dans un micro-réacteur placé au centre d'un four. Ils subissent un prétraitement à 600°C pendant 5 heures sous un mélange gazeux constitué d'azote contenant 18,5 % O₂ et 4 % H₂O puis sont ramenés sous le même mélange à 50°C. Les matériaux sont alors traversés par un gaz contenant des oxydes d'azote dont la composition est transitoire, en alternance composé d'un mélange pauvre en hydrocarbures (richesse R égale à 0.3) pendant 90 secondes puis d'un mélange riche en hydrocarbures (R = 1.2) pendant 30 sec, et sont amenés à différents paliers de températures compris entre 50 et 600°C :

| | | |
|---|---|---|
| Vitesse spatiale horaire (VVH) : | | 50 000h⁻¹ |
| Composition du mélange pauvre (R=0,3) : | | |
| | NOₓ : | 450ppm : NO 365ppm, NO2 85ppm |
| | O₂ : | 18.5% |
| | H₂O : | 4% |
| | C₂H₄ : | 500ppmC |
| | CO₂ : | 5% |
| | N₂ : | complément à 100% |

| Composition du mélange riche (R=1,2) : | |
|---|---|
| NOₓ : | 450ppm : NO 365ppm, NO2 85ppm |
| O₂ : | 0.5% |
| H₂O : | 4% |
| C₂H₄ : | 500ppmC |
| CO : | 3% |
| CO₂ : | 5% |
| N₂ : | complément à 100% |

Les figures I et II annexées montrent le mode de fonctionnement du matériau de l'exemple 1 en palier isotherme à respectivement 300°C et 400°C.

Dès 225°C, les injections de gaz en phase riche permettent de régénérer le piège à NOx, c'est à dire de désorber la totalité des NOₓ préalablement adsorbés pendant le mode de fonctionnement en pauvre. Cela permet de rétablir la capacité d'adsorption du matériau à chaque passage en gaz pauvre.

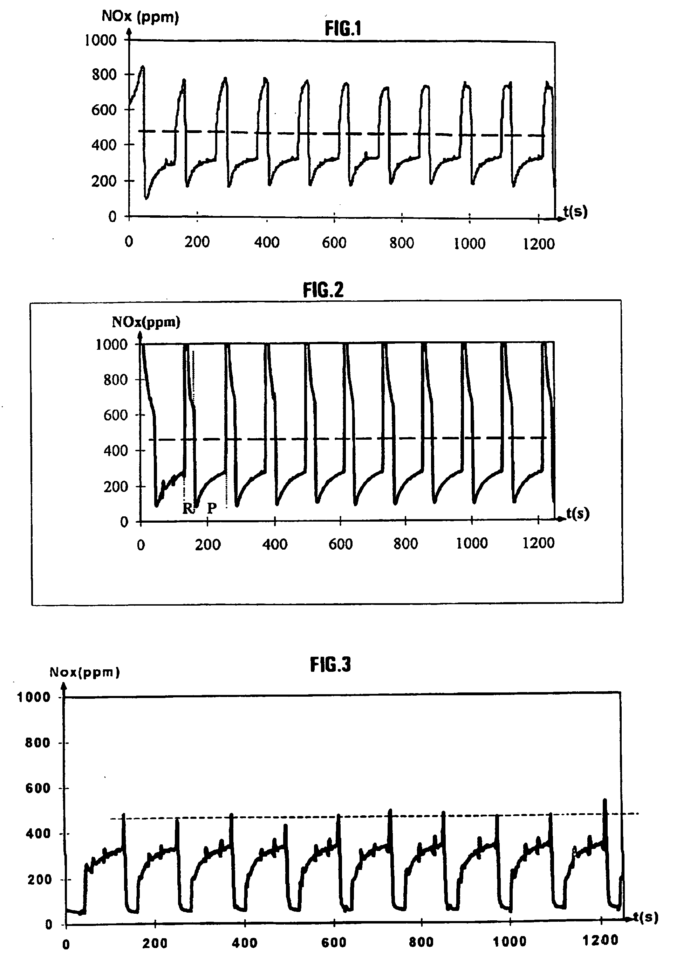

La figure III annexée montre le mode de fonctionnement du matériau de l'exemple 3 en palier isotherme à 400°C. Elle démontre que du platine associé à la phase adsorbante permet de réduire les oxydes d'azote qui sont désorbés lors de la régénération en phase riche. On observe ce phénomène de réduction des oxydes d'azote dès la température de 300°C.

## Revendications

1. Procédé pour l'élimination des oxydes d'azote dans des gaz d'échappement, en particulier de moteurs à combustion interne de véhicules automobiles, en présence d'un matériau de formule ABO₃ présentant la structure ilménite, comprenant au moins un cation métallique A choisi dans le groupe constitué par le nickel, le cobalt, le fer, le zinc, le manganèse, le cuivre, le magnésium, l'argent, le lithium, le sodium, le potassium, le calcium, le strontium, le cadmium, le plomb et l'étain et au moins un cation métallique B choisi dans le groupe constitué par le manganèse, le vanadium, le niobium; le silicium, le zirconium, l'étain, le chrome, l'antimoine, le bismuth et le germanium, lesdits cations A et B étant chacun en coordinence avec 6 atomes d'oxygène et le rapport du rayon cationique de A sur le rayon cationique de B étant égal à 1±0,4.

2. Procédé selon la revendication 1, **caractérisé en ce que** ledit élément (A) est choisi dans le groupe constitué par le nickel, le magnésium, le zinc, le cobalt, le cadmium, le fer et le cuivre.

3. Procédé selon l'une des revendications 1 à 2, **caractérisé en ce que** ledit élément (B) est choisi dans le groupe constitué par le manganèse, le vanadium, le niobium, le silicium, l'étain et le germanium.

4. Procédé selon l'une des revendications 1 à 3 **caractérisé en ce que** ledit matériau de formule ABO₃ comprend en outre au moins un métal (C) choisi parmi les métaux nobles du groupe VIII.

5. Procédé selon la revendication 4, **caractérisé en ce** ledit l'élément (C) est le platine.

6. Procédé selon l'une des revendications 1 à 5 **caractérisé en ce que** la surface spécifique dudit matériau de formule ABO₃ est comprise entre 20 et 300 m² g⁻¹.

7. Procédé selon l'une des revendications 1 à 6, **caractérisé en ce que** ledit matériau comprend au moins un support poreux.

8. Procédé selon la revendication 7, **caractérisé en ce que** le support poreux est choisi parmi les composés suivants : SiO₂, Al₂O₃, TiO₂, ZrO₂, SiC, MgO, alumino-silicate.

9. Procédé selon l'une des revendications 1 à 8 **caractérisé en ce que** ledit matériau comprend au moins un support rigide.

10. Procédé selon l'une des revendications 1 à 9 comprenant une étape d'adsorption des oxydes d'azote effectuée à une température comprise entre 50 et 400°C.

11. Procédé selon la revendication 10 comprenant une étape de désorption thermique des oxydes d'azote effectuée à une température comprise entre 300 et 500°C.

12. Procédé selon la revendication 10 comprenant une étape de désorption chimique des oxydes d'azote par variation de la composition chimique des gaz, effectuée à une température comprise entre 150 et 500°C.

13. Procédé selon l'une des revendications 10 à 12 comprenant en outre une étape de réduction des oxydes d'azote en azote moléculaire et/ou en protoxyde d'azote.

14. Procédé selon la revendication 13 telle que l'étape d'adsorption, l'étape de désorption et l'étape de réduction des oxydes est effectuée en présence d'un matériau selon l'une des revendications 4 à 5.

15. Procédé selon la revendication 13 tel que la réduction des oxydes d'azote a lieu en présence d'un catalyseur comprenant au moins un oxyde inorganique réfractaire, éventuellement au moins une zéolithe, au moins un élément choisi parmi les éléments des groupes VIB, VIIB, VIII et IB des métaux de transition, éventuellement au moins un élément choisi parmi les métaux nobles du groupe VIII, et éventuellement au moins un élément choisi parmi les éléments des groupes IIA des alcalino-terreux et IIIB des terres rares.

16. Procédé selon la revendication 1 **caractérisé en ce que** le moteur est un moteur de type Diesel.

## Claims

1. Method of removing the nitrogen oxides in exhaust gases, particularly from internal combustion engines of automotive vehicles, in the presence of a material of the formula ABO₃ with the ilmenite structure, comprising at least one metal cation A selected from the group consisting of nickel, cobalt, iron, zinc, manganese, copper, magnesium, silver, lithium, sodium, potassium, calcium, strontium, cadmium, lead and tin and at least one metal cation B selected from the group consisting of manganese, vanadium, niobium, silicon, zirconium, tin, chromium, antimony, bismuth and germanium, said cations A and B each being coordinated by 6 oxygen atoms and the ratio of the cationic radius of A to the cationic radius of B being equal to 1 ± 0.4.

2. Method according to Claim 1, **characterized in that** said clement (A) is selected from the group consisting ofnickel, magnesium, zinc, cobalt, cadmium, iron and copper.

3. Method according to Claims 1 to 2, **characterized in that** said element (B) is selected from the group consisting of manganese, vanadium, niobium, silicon, tin and germanium.

4. Method according to one of Claims 1 to 3, **characterized in that** said material of the formula ABO₃ also comprises at least one metal (C) selected from the noble metals of group VIII.

5. Method according to Claim 4, **characterized in that** said element (C) is platinum.

6. Method according to one of Claims 1 to 5, **characterized in that** the specific surface area of said material of the formula ABO₃ is between 20 and 300 m²g⁻¹.

7. Method according to one of Claims 1 to 6, **characterized in that** said material comprises at least one porous support.

8. Method according to Claim 7, **characterized in that** the porous support is selected from the following compounds: SiO₂, Al₂O₃, TiO₂, ZrO₂, SiC, MgO and aluminosilicate.

9. Method according to one of Claims 1 to 8, **characterized in that** said material comprises at least one rigid support.

10. Method according to one of Claims 1 to 9 which comprises a nitrogen oxide adsorption step carried out at a temperature of between 50 and 400°C.

11. Method according to Claim 10 which comprises a nitrogen oxide thermal desorption step carried out at a temperature of between 300 and 500°C.

12. Method according to Claim 10 which comprises a nitrogen oxide chemical desorption step by variation of the chemical composition of the gases, carried out at a temperature of between 150 and 500°C.

13. Method according to one of Claims 10 to 12 which also comprises a step for reduction of the nitrogen oxides to molecular nitrogen and/or nitrous oxide.

14. Method according to Claim 13 which is such that the oxide adsorption step, desorption step and reduction step are carried out in the presence of a material according to one of Claims 4 and 5.

15. Method according to Claim 13 which is such that the nitrogen oxide reduction takes place in the presence of a catalyst comprising at least one refractory inorganic oxide, optionally at least one zeolite, at least one element selected from the elements of groups VIB, VIIB and VIII and transition metal group IB, optionally at least one element selected from the noble metals of group VIII and optionally at least one element selected from the elements of alkaline earth group IIA and rare earth group IIIB.

16. Method according to Claim 1, **characterized in that** the engine is a diesel engine.

## Patentansprüche

1. Verfahren zum Entfernen von Stickoxiden in Abgasen, insbesondere von Kraftfahrzeugverbrennungsmotoren, in Gegenwart eines Materials der Formel ABO₃, das Ilmenit-Struktur aufweist, das mindestens ein Metallkation A umfasst, ausgewählt aus der Gruppe, bestehend aus Nickel, Cobalt, Eisen, Zink, Mangan, Kupfer, Magnesium, Silber, Lithium, Natrium, Kalium, Calcium, Strontium, Cadmium, Blei und Zinn, und mindestens ein Metallkation B, ausgewählt aus der Gruppe, bestehend aus Mangan, Vanadium, Niob, Silicium, Zirconium, Zinn, Chrom, Antimon, Wismut und Germanium, wobei die Kationen A und B jeweils mit 6 Sauerstoffatomen koordinativ angelagert sind, und das Verhältnis des Kationradius von A zum Kationradius von B gleich 1±0,4 ist.

2. Verfahren nach Anspruch 1, **dadurch gekennzeichnet, dass** das Element (A) ausgewählt ist aus der Gruppe, bestehend aus Nickel, Magnesium, Zink, Cobalt, Cadmium, Eisen und Kupfer.

3. Verfahren nach einem der Ansprüche 1 bis 2, **dadurch gekennzeichnet, dass** das Element (B) ausgewählt ist aus der Gruppe, bestehend aus Mangan, Vanadium, Niob, Silicium, Zinn und Germanium.

4. Verfahren nach einem der Ansprüche 1 bis 3, **dadurch gekennzeichnet, dass** der Werkstoff der Formel ABO₃ ferner ein Metall (C) umfasst, ausgewählt aus den Edelmetallen der Gruppe VIII.

5. Verfahren nach Anspruch 4, **dadurch gekennzeichnet, dass** das Element (C) Platin ist.

6. Verfahren nach einem der Ansprüche 1 bis 5, **dadurch gekennzeichnet, dass** die spezifische Oberfläche des Werkstoffs der Formel ABO₃ im Bereich zwischen 20 und 300 m² g⁻¹ liegt.

7. Verfahren nach einem der Ansprüche 1 bis 6, **dadurch gekennzeichnet, dass** der Werkstoff mindestens einen porösen Träger umfasst.

8. Verfahren nach Anspruch 7, **dadurch gekennzeichnet, dass** der poröse Träger ausgewählt ist aus den folgenden Verbindungen: SiO₂, Al₂O₃, TiO₂, ZrO2, SiC, MgO, Alumosilicat.

9. Verfahren nach einem der Ansprüche 1 bis 8, **dadurch gekennzeichnet, dass** der Werkstoff mindestens einen festen Träger umfasst.

10. Verfahren nach einem der Ansprüche 1 bis 9, das einen Schritt der Adsorption der Stickoxide umfasst, der bei einer Temperatur im Bereich zwischen 50 und 400 °C durchgeführt wird.

11. Verfahren nach Anspruch 10, das einen Schritt der thermischen Desorption der Stickoxide umfasst, der bei einer Temperatur im Bereich zwischen 300 und 500 °C durchgeführt wird.

12. Verfahren nach Anspruch 10, das einen Schritt der chemischen Desorption der Stickoxide durch Veränderung der chemischen Zusammensetzung der Gase umfasst, der bei einer Temperatur im Bereich zwischen 150 und 500 °C durchgeführt wird.

13. Verfahren nach einem der Ansprüche 10 bis 12, das ferner einen Schritt der Reduktion der Stickoxide in molekularen Stickstoff und/oder Distickstoffmonoxid umfasst.

14. Verfahren nach Anspruch 13, so dass der Schritt der Adsorption, der Schritt der Desorption und der Schritt der Reduktion der Oxide in Gegenwart eines Materials gemäß einem der Ansprüche 4 bis 5 durchgeführt wird.

15. Verfahren nach Anspruch 13, so dass die Reduktion der Stickoxide in Gegenwart eines Katalysators stattfindet, der mindestens ein anorganisches refraktäres Oxid, gegebenenfalls mindestens einen Zeolithen, mindestens ein Element, ausgewählt aus den Elementen der Gruppen VIB, VIIB, VIII und IB der Übergangsmetalle, gegebenenfalls mindestens ein Element, ausgewählt aus den Edelmetallen der Gruppe VIII, und gegebenenfalls mindestens ein Element, ausgewählt aus den Elementen der Gruppen IIA der Erdmetalle und IIIB der Seltenerden umfasst.

16. Verfahren nach Anspruch 1, **dadurch gekennzeichnet, dass** der Motor ein Dieselmotar ist.
